# FASCICULE DE BREVET EUROPEEN

(11) **EP 4 347 385 B1**
(45) Date de publication et mention de la délivrance du brevet: **11.03.2026**
(21) Numéro de dépôt: 22733695.5
(22) Date de dépôt: 30.05.2022
(51) Int. Cl.: B63H 9/061

(54) **ÉLÉMENT DE PROPULSION VÉLIQUE, VÉHICULE À PROPULSION VÉLIQUE**
SEGELANTRIEBSELEMENT, SEGELANGETRIEBENES FAHRZEUG
SAIL PROPULSION ELEMENT, SAIL-PROPELLED VEHICLE

(30) Priorité: 28.05.2021 FR 2105608
(43) Date de publication de la demande: 10.04.2024
(73) Titulaire: COMPAGNIE GENERALE DES ETABLISSEMENTS MICHELIN, 63000 Clermont-Ferrand (FR)
(72) Inventeur: ESSINGER, Olivier, 63040 CLERMONT-FERRAND Cedex 9 (FR); FRAGNIERE, Bruno, 63040 CLERMONT-FERRAND Cedex 9 (FR); KESSI, Edouard, 1162 St-Prest (CH); DE KALBERMATTEN, Laurent, 1632 RIAZ (CH)
(74) Mandataire: M.F.P. Michelin
(86) Numéro de dépôt international: PCT/FR2022/051018
(87) Numéro de publication internationale: WO 2022/248812

(56) Documents cités:
- FR-A- 1 464 877
- US-A- 5 279 241
- US-A- 5 931 109
- US-B2- 6 892 659

## Description

L'invention concerne une voile gonflable et se situe dans le domaine de la propulsion vélique ou celui de la propulsion vélique hybride.

On rappelle ci-après quelques définitions utilisées dans ce qui suit. :
- **Prise de ris :** consiste à réduire la surface d'une voile en le repliant en partie par le bas, afin d'adapter la surface de la voile à la force du vent. La prise de ris peut se faire manuellement ou automatiquement.
- **Bandes de ris :** zones horizontales en parties renforcées permettant de fixer les renvois pour prise de ris, avec par exemple des œillets ou des poulies. Ces bandes de ris sont disposées sur la voile au niveau de la nervure à chaque hauteur où une prise de ris est prévue. Il y a autant de bandes de ris que de possibilités de réduire la voilure.
- **Vérins paresseux** (en anglais lazy jack) : dispositif permettant de guider la voile pendant les manœuvres de prises de ris et d'affalage de la voile.
- **Bôme :** espar horizontal, articulé à la base du mât, et qui permet de maintenir **et d'orienter** certaines voiles. La bôme peut également recevoir la voile lorsque celle-ci est affalée. Certains voiliers ont un enrouleur de mât ; la voile est alors stockée dans le mât.
- **Faseyer :** une voile qui faseye est une voile insuffisamment bordée qui se dégonfle en partie. Une voile bien réglée doit être à la limite du faseyement. Avec une voile gonflée, il n'y a pas de faseyement, ce qui permet de rester face au vent.
- **Bord d'attaque** : partie avant d'un profil aérodynamique (aile, hélice, etc) où un fluide va se séparer en deux.
- **Bord de fuite** : partie caractéristique de tout profilé (aile, quille, safran, etc) soumis à un écoulement d'un fluide (air, eau, etc) de part et d'autre. Il désigne la partie opposée au sens de la direction, ou en d'autres termes, la partie arrière considérée dans le sens de l'écoulement.
- Têtière : extrémité supérieure de la voile qui épouse le contour supérieur de la voile.
- **Affalage** : consiste à descendre la voile.
- **Hissage :** consiste à monter la voile.
- **Gréement :** ensemble des pièces fixes et mobiles d'un bateau, type voilier, **permettant sa** propulsion et ses manœuvres.
- **Réceptacle de voile** : en plus de recevoir la voile affalée, il peut intégrer d'autres fonctions, telles que reprendre les efforts de tension fournis par la voile, ou bien loger d'autres actionneurs, capteurs stockage d'énergie et module de commande utilisés pour opérer la voile.
- **Traînée hydrodynamique** : force de frottement entre le bateau et l'eau. Plus la traînée est élevée, plus le bateau freine.
- **Traînée aérodynamique** : composante de la force subie par un corps en mouvement dans un fluide qui s'exerce dans le sens opposé à la direction du mouvement. Selon l'invention, la voile génère une traînée aérodynamique.
- **Portance aérodynamique :** composante de la force subie par un corps en mouvement dans un fluide qui s'exerce perpendiculairement à la direction du mouvement. Selon l'invention, la voile génère une portance aérodynamique.
- **Vent relatif ou vent apparent** : somme vectorielle du vent créé par la propre vitesse du bateau et la vitesse réelle du vent.
- **Résultante aérodynamique :** somme vectorielle de la portance aérodynamique et de la traînée aérodynamique.

### Art antérieur

Il est déjà connu du document WO 2017/221117A1 un élément de propulsion vélique comprenant une voile gonflable à profil symétrique. Cet élément de propulsion comprend une voile gonflable constituée essentiellement de deux surfaces adjacentes, sensiblement étanches et reliées entre elles sur leur pourtour, formant ainsi au moins une cavité fermée. L'élément comprend en outre un conduit disposé entre l'intérieur et l'extérieur de la cavité et des moyens pour injecter de l'air dans la cavité. Cette voile une fois gonflée présente un profil qui reste en permanence symétrique, indépendamment du déplacement de l'élément, de la direction ou de l'intensité du vent. La voile de ce document est constamment gonflée lors de son utilisation en navigation.

Malheureusement, une telle voile souple présente l'inconvénient de ne pas présenter un gonflement adapté aux différentes étapes de son utilisation, et notamment lors des phases d'affalage et de hissage. En effet, contrairement à une voile rigide, une voile souple ne présente pas une position bien définie lors de ces étapes de manipulation (hissage et affalage). Durant ces étapes il est important de conserver la voile proche de l'axe de symétrie du profil de la voile, de manière à éviter que la voile tombe à l'eau ou s'accroche à un élément proche d'elle ou ne s'empile pas de manière convenable pour être rangée de manière compacte. Par ailleurs, il est important de conserver une faible pression à l'intérieur de la voile, durant la phase d'affalage ou de prise de ris, pour éviter qu'elle ne faseye, ce qui pourrait diminuer sa durée de vie.

Enfin, une telle voile nécessite la présence de plusieurs points d'injection d'air, pour son hissage lorsqu'elle est pliée, obligeant ainsi d'adapter la structure du tissu constituant la voile mais sans pour autant permettre un déploiement rapide et sûr de la voile pliée.

Il est encore connu du document WO2009043823A1 un parapente dont le profil d'aile, qui s'étend du bord d'attaque au bord de fuite, comprend une pluralité de cellules dans le sens de l'envergure de la voile, espacées les unes des autres par des nervures. Un tel parapente comprend différentes ouvertures d'entrée d'air en aval qui servent à remplir le premier espace de stockage pendant le vol.

Malheureusement une telle voile comprend différentes catégories de cellules, comprenant ou non des ouvertures destinées au passage de l'air. Ces cellules ne sont pas uniquement prévues pour la transmission régulière et continue de l'air d'une cellule à l'autre, et ceci jusqu'au déploiement totale de la voile pliée, mais aussi pour l'éjection de l'air lors de l'affalage partiel ou total sans risque de voir la voile tomber à l'eau. Enfin une répartition irrégulière des ouvertures sur le volume de la voile favorise l'arrivée de difficultés dans le déploiement de la voile par la probabilité importante de bouchon au niveau des orifices, de par le fait qu'ils ne seront pas alignés pour permettre le passage de l'air.

Les documents US 6892659 B2 et US 5931109 A divulguent aussi des éléments de propulsion vélique similaires.

### Résumé de l'invention

Aussi il subsiste le besoin de disposer d'une voile gonflable qui, lors de l'affalage/gonflage transmet uniformément et régulièrement l'air dans la totalité du volume de la voile, tout en restant correctement sur son axe de symétrie le long du mât, sans faseyer, ni risque d'être endommagée, et qui puisse être déployée en tout ou partie de manière répétée, manuellement ou automatiquement. En outre, même en position déployée, il existe le besoin de pouvoir minimiser la consommation des dispositifs de gonflage, ainsi que de pouvoir les disposer dans le réceptacle de voile da façon à simplifier l'alimentation en énergie électrique.

L'invention a pour objet un élément de propulsion vélique comprenant un mât, une voile gonflable constituée essentiellement de deux surfaces adjacentes sensiblement étanche et reliées entre elles sur leur pourtour, formant de la sorte entre elles au moins une cavité fermée autour du mât, ladite voile comprenant une partie supérieure, une partie inférieure, un bord d'attaque et un bord de fuite, au moins un conduit d'air disposé entre l'intérieur et l'extérieure de la cavité de la voile, au moins un moyen pour injecter de l'air dans ladite cavité, la voile une fois gonflée présentant un profil qui reste en permanence symétrique, indépendamment du déplacement dudit élément de propulsion, de la direction ou de l'intensité du vent, une têtière disposée sur la partie supérieure de la voile, un réceptacle de voile disposé entre le bord d'attaque et le bord de fuite sur la partie inférieure de la voile.

L'élément de propulsion selon l'invention se caractérise en ce que la voile comprend une pluralité de cellules dans le sens de l'envergure de la voile, chaque cellule s'étendant du bord d'attaque au bord de fuite, lesdites cellules étant espacées par une nervure constituée en un premier matériau souple qui laisse passer l'air, par exemple une structure de type 3D.

Une nervure délimite ainsi deux cellules voisines, plusieurs nervures étant prévues pour délimiter les différentes cellules de la voile. Il est intéressant que la nervure laisse passer l'air, minimise la perte de charge mais également permette le passage des efforts. Il convient ici de souligner l'importance de pouvoir réduire à un minimum la perte de charge de l'air durant le gonflage, c'est-à-dire le niveau de pression que doit vaincre l'air pour parcourir tout son chemin. En effet, lorsque la voile est affalée et que l'opérateur souhaite procéder à un gonflage à l'air de la voile, il est primordial que l'air soufflé, qui arrive, dans la solution de l'invention, par le bas de la voile, ne reste pas coincé au niveau du caisson le plus bas (ou cellule inférieure) mais puisse accéder le plus facilement possible au gonflage de la partie haute de la voile (aux cellules supérieures de la voile). Disposer, comme l'invention le propose, entre les cellules, de nervures pouvant laisser passer l'air, permet de résoudre ce problème car c'est toute la surface de la nervure qui peut être mise à profit pour laisser passer l'air. Ainsi, à l'opposé de configurations de l'état de la technique où l'air doit passer par quelques trous aménagés dans la nervure et où les pertes de charge peuvent être plus élevées selon la manière dont sont empilées ces nervures quand la voile est affaissée, l'air arrive toujours à trouver un chemin facile pour alimenter toutes les cellules et en particulier celles se trouvant dans la partie haute de la voile.

L'élément de propulsion selon l'invention présente les différents avantages suivants.

Grâce à un passage en continu de l'air au travers de chaque nervure, l'air circule de manière régulière et uniforme d'une cellule à l'autre. En effet, même si un seul point d'injection d'air est présent, le fait que les nervures laissent passer l'air à travers sensiblement toute leur surface permet d'obtenir une pression interne pratiquement uniforme dans la totalité du volume, ce qui garantit la précision du profil de la voile. La présence de telles nervures facilite le gonflage et le pliage automatique, après dégonflage de la voile, et notamment en utilisant uniquement des ventilateurs présents au niveau du réceptacle de voile, situés donc en partie inférieure de la voile, et ceci sans aucune intervention quelconque externe. Les nervures poreuses à l'air améliorent la transmission de l'air tout en disposant les ventilateurs en partie inférieure de la voile par rapport aux solutions existantes. Ainsi, dans les voiles gonflables de l'état de la technique, l'arrivée d'air se fait via d'orifices multiples et des ventilateurs disposés sur le bord d'attaque de la voile, dans quel cas les câbles électriques d'alimentation doivent passer à travers les différentes cellules pour connecter les ventilateurs. A l'aide de nervures poreuses à l'air sur sensiblement toute leur surface, on simplifie l'alimentation électrique des actuateurs (ventilateurs) qui peuvent ainsi être situés dans le réceptacle de réception de la voile, donc en partie inférieure de celle-ci, tout en offrant un gonflage uniforme dans tout le volume de la voile. Les ventilateurs peuvent être remplacés par d'autres moyens d'injection d'air, tels que par exemple des soufflantes ou une amenée d'air sous pression.

Par profil symétrique on comprend un profil qui est parfaitement symétrique lorsque les pressions sur l'intrados et l'extrados de l'aile sont égales, mais qui peut varier légèrement, étant donné la souplesse de la voile (qu'on appelle par ailleurs aile lorsqu'on parle d'une voile gonflée) lorsque la différence de pression entre l'intrados et l'extrados de la voile amène à une légère déformation du profil.

De préférence, chaque nervure comprend une zone de renfort délimitée autour du mât et constituée en un matériau composite souple, renforcé de manière à permettre le passage des efforts.

De préférence, le premier et le second matériau souples sont des matériaux tissés ayant un tissage différent.

De préférence, le premier matériau souple comprend des mailles de tissage d'environ 2 à 4 mm.

De préférence, le second matériau souple comprend des mailles de tissage d'environ 2 à 4 mm.

De préférence, la nervure comprend une bande centrale qui s'étend du bord d'attaque au bord de fuite.

De préférence, la bande centrale est constituée par le second matériau souple. Dans une variante de l'invention, la bande centrale est pleine.

De préférence, la bande centrale a une largeur allant de 1 à 10 cm.

De préférence, les cellules sont espacées entre elles d'une distance comprise entre 0,8 et 2m.

De préférence, des renforts ponctuels sont disposés régulièrement sur le bord d'attaque.

De préférence, une ligne de guidage est disposée dans la cavité fermée de ladite voile, pour les manœuvres de hissage et d'affalage de la voile, ladite ligne de guidage s'étendant du bord d'attaque au bord de fuite de ladite voile, en passant par la têtière et le réceptacle de voile, ladite ligne de guidage passant au travers des renforts ponctuels. Pour rappel, la ligne de guidage est un dispositif réalisé au travers d'un cordage permettant d'assurer en fonctionnement et durant les phases de hissage ou d'affalage le bon positionnement géométrique de la voile. En effet, une nervure de la voile, par exemple considérée à la mi-hauteur de la celle-ci, est contrainte dans sa position par le fait qu'elle laisse passer le mât dans un trou aménagé à cet effet, mais hormis la rigidité de la voile (qui est faible), rien ne l'empêche de tourner autour du mât sous l'effet des pressions s'exerçant sur la voile. Une telle rotation aurait pour effet un vrillage de la voile et donc une modification de profil préjudiciable à sa performance. Pour éviter ce vrillage, chaque nervure est traversée par la ligne de guidage en un point suffisamment éloigné du mât. Lors de l'affalage ou du hissage, la nervure coulisse le long du mât et le long de cette ligne de guidage.

De préférence, lorsqu'une ligne de guidage est présente, elle est constituée en une partie, et est fixée de manière fixe au réceptacle de voile sur le bord de fuite et mobile par enrouleur sur le bord d'attaque, ou bien, mobile par enrouleur au réceptacle de voile sur le bord de fuite et fixe sur le bord d'attaque et en ce que la ligne de guidage est disposée le long de la têtière de manière mobile sur au moins une poulie entre le bord de fuite et le bord d'attaque.

De préférence, lorsqu'une ligne de guidage est présente, elle est constituée de deux parties, la première partie côté bord de fuite est fixée ou bien mobile avec une poulie sur la têtière et mobile par enrouleur sur le réceptacle, la seconde partie côté bord d'attaque, est fixée ou bien mobile avec une poulie sur la têtière et mobile par enrouleur sur le réceptacle.

Un autre objet de la présente invention est un véhicule à propulsion vélique ou hybride comprenant au moins un élément de propulsion vélique tel que cité précédemment, une coque et un mât rendu solidaire de ladite coque tout en gardant un degré de liberté en rotation. Ce véhicule se caractérise en ce que la majeure partie du mât est disposée à l'intérieur de la cavité de voile gonflable citée ci-dessus.

De préférence, le mât est disposé à l'intérieur de la cavité de ladite voile gonflable.

De préférence, la voile est orientée en fonction de la direction du vent, et la direction de marche du véhicule de manière manuelle ou automatique.

Par véhicule à propulsion hybride selon l'invention, on entend la propulsion vélique couplée à une autre source de propulsion comme par exemple une propulsion par une hélice, entraînée par un moteur électrique ou à combustion, avec comme stockage d'énergie des batteries, de l'hydrogène (avec une pile à combustible), du gaz naturel ou du fuel.

Par véhicule, on entend tout engin comprenant des roues ou non, se déplaçant sur terre ou sur l'eau.

### Description des dessins

L'invention va être décrite à l'aide des figures suivantes, schématiques et non nécessairement à l'échelle, et dans lesquelles :
- La figure 1 représente un rappel des différentes forces physiques qui s'appliquent sur un navire, par exemple du type voilier avec un moteur, et notamment la projection de la force aérodynamique résultante ;

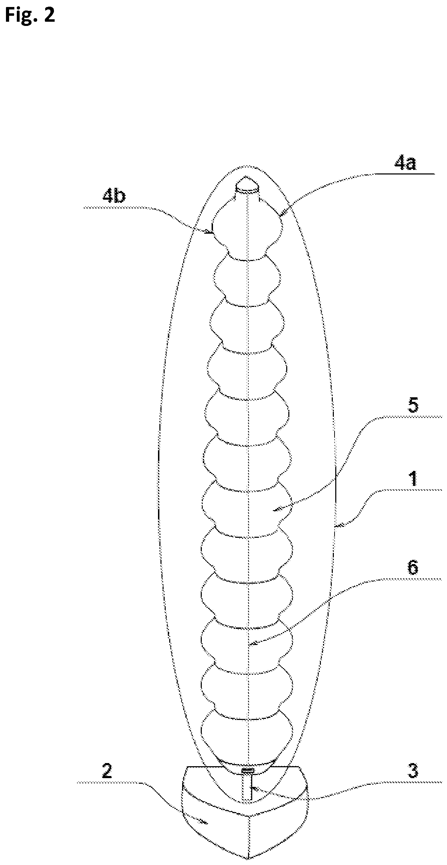

- La figure 2 représente une vue schématique de face de l'élément de propulsion vélique totalement hissée, selon l'invention ;
- La figure 3 représente une vue schématique de face de l'élément de propulsion vélique comprenant partiellement des nervures ;
- La figure 4 représente une vue schématique agrandie de la portion de l'élément de propulsion vélique selon l'invention, comprenant des nervures ;
- La figure 5 représente nervure une vue schématique de face de l'élément de propulsion vélique totalement plié, selon l'invention ;
- La figure 6 représente une vue schématique en perspective d'une nervure.

Avant d'expliquer plus en détail l'élément de propulsion vélique, objet de la présente invention, à l'aide des figures citées, un rappel de quelques définitions d'hydrodynamique et d'aérodynamique est exposé ci-après.

Un véhicule à propulsion vélique, dénommé ci-après voilier ou navire, est en contact avec l'air et avec l'eau. Sur le plan de la physique, les facteurs prépondérants sont les forces hydrodynamique et aérodynamiques qui s'exercent sur la coque, les voiles et les appendices (dérives, quille, gouvernail, hélice).

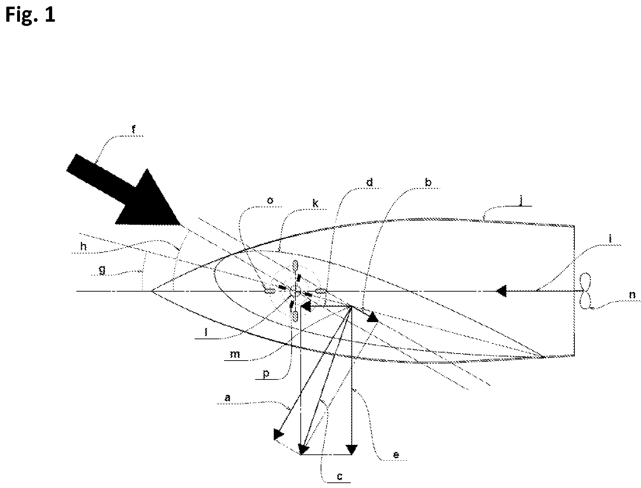

Comme le montre **la** **figure** 1, la force **aérodynamique** (ou poussée vélique) résulte de la déviation de l'air par au moins une voile. La force aérodynamique est relative à la position et la surface de la voile et, à la position et la force du vent relatif. La force de traînée est dans la direction du vent relatif, la force de portance est dans la direction perpendiculaire du vent relatif, elle n'est pas toujours perpendiculaire à la voile. Par exemple, à 0°, un profil symétrique n'a pas de portance de par le fait que l'air parcourt strictement la même distance sur l'extrados et l'intrados. Il ne génère à ce moment que de la traînée.

La force aérodynamique, générée par la voile, peut aussi être décomposée dans le référentiel du bateau, et non pas dans celui de la voile, pour être composée de la force propulsive vélique (qui est dans l'axe de marche du bateau) et en une force de dérive (perpendiculaire à l'axe du bateau) qui peut induire de la gîte (inclinaison transversale d'un bateau causée par un phénomène extérieur tel que le vent).

La force **hydrodynamique** résulte du frottement de l'eau sur la coque et la dérive ou quille et les différents appendices immergés. Sa direction dépend de la force aérodynamique à laquelle elle s'oppose, de la force propulsive en mode hybride, de l'état de la mer et des courants marins. La composante longitudinale est appelée traînée hydrodynamique, et la composante transversale est appelé portance de la dérive ou force anti-dérive ou portance hydrodynamique. La direction et l'intensité de la force hydrodynamique ne dépend pas que de la force aérodynamique. Pour un bâtiment (bateau) fonctionnant en mode hybride (vent et autre énergie), la force hydrodynamique va dépendre fortement de la vitesse du bâtiment générée par la propulsion thermique ou électrique par exemple, de l'état de la mer et des courants marins.

Lorsque la force vélique est supérieure à la force hydrodynamique le bateau accélère. Lorsque la force vélique est inférieure à la force hydrodynamique le bateau ralentit. En outre, si la force aérodynamique est plus grande mais dirigée vers l'arrière du bateau ce dernier va ralentir. Si la force hydrodynamique est dans le sens de marche du bateau (car il y a un fort courant), le bateau va accélérer.

C'est en optimisant le réglage de la voile que le voilier atteindra sa performance maximale en termes de poussée vélique dans le sens de la marche. En effet, c'est l'optimisation de l'angle de la voile par rapport au vent relatif et à la direction du bateau, ainsi que le réglage de la surface de la voile qui permettra au bateau d'atteindre le maximum de sa propulsion vélique dans l'axe du bateau. Il peut y avoir un réglage supplémentaire, selon les conditions de vent, pour faire varier la pression interne de la voile. Ceci permet ainsi d'augmenter la vitesse du bateau ou au contraire de conserver la même vitesse tout en diminuant la consommation d'autres énergies, par la faveur de la propulsion vélique.

La figure 1 reprend chacune des dénominations précédentes avec une référence qui lui est propre listées ci-après :
a : Force de portance
b : Force de trainée
c : Force résultante aérodynamique
d : Force poussée aérodynamique (dans l'axe du navire)
e : Force de dérive aérodynamique
f : Vent relatif
g : Angle relatif aile - axe bateau (ex : 15°)
h : Angle vent relatif et axe bateau (ex : 30°)
i : Force propulsive hélice
j : Coque
k : Voile
l : Mât
m : Centre de poussée aérodynamique
n : Hélice
o : Capteur sur partie fixe (référentiel coque)
p : Capteur sur partie mobile (référentiel voile).
Les informations données par la figure 1 permettent de passer des capteurs de données provenant du référentiel de la coque, aux capteurs de données provenant du référentiel de la voile, et inversement.

**La figue** 2 représente l'élément de propulsion de référence générale 1 selon l'invention monté sur une coque 2 de bateau, type voilier, à l'aide d'un mât 3 autoporté. La liaison du mât 3 avec la coque est effectuée à l'aide d'un support (non représenté) destiné à récupérer les efforts de forces physiques. Les efforts sont mesurés au niveau du support ou du mât lui-même. La voile comprend deux surfaces adjacentes 4a et 4b reliées entre elles de manière à former une cavité fermée. Chaque surface 4a, 4b peut être constituée d'un matériau ayant plusieurs couches, de manière à satisfaire les différentes caractéristiques, telles que résistance mécanique, étanchéité, contre le feu, contre les UV.

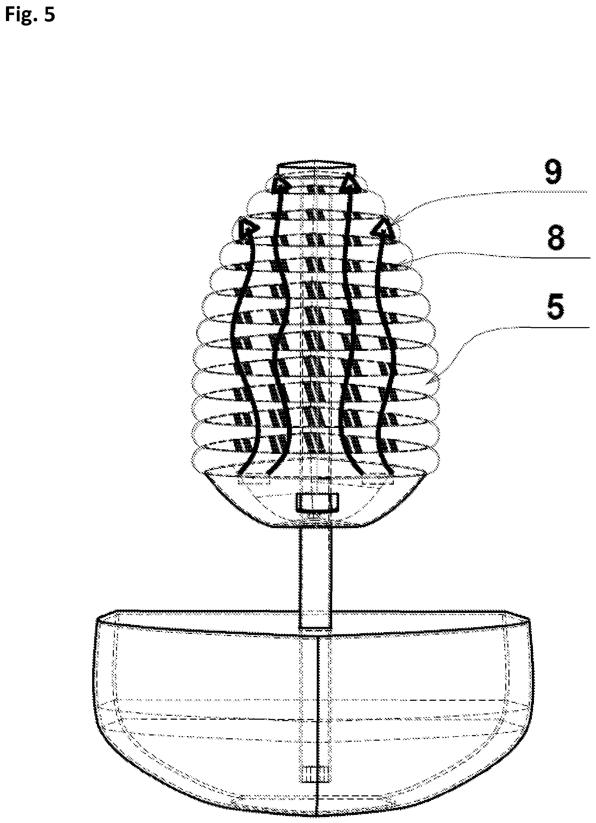

La voile 1 comprend plusieurs cellules 5 réparties sur toute la hauteur de la voile 1 dans le sens de l'envergure. Chaque cellule 5 s'étend du bord d'attaque 6 au bord de fuite 7 (comme représenté sur la figure 5). Les cellules 5 sont espacées d'environ 1m les unes des autres.

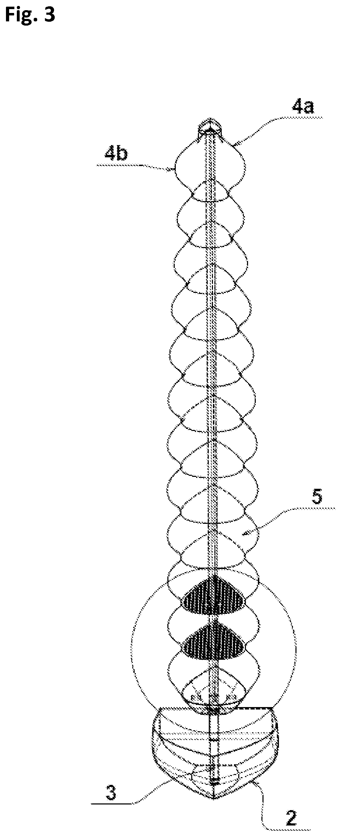

Comme le montre **la** **figure 3****,** les cellules 5 sont séparées les unes des autres par une nervure 8. Chaque nervure 8 est constituée d'un premier matériau, par exemple, tissé constitué d'un maillage de chaine avec des trames d'environ 3 mm, le fil peut être enduit avec un composé tel que le PVC. Ce type de tissage en 3D garantit le passage correct de l'air même lorsque la voile est repliée, en mode affalée.

Ce premier matériau qui peut être tissé est fixé à la voile par un moyen collant, par couture ou soudure ou tout autre moyen permettant de solidariser l'ensemble. Aucune enduction n'est ensuite effectuée, car elle boucherait les pores du matériau, et empêcherait l'air de circuler correctement.

Il est encore possible d'utiliser comme premier matériau tissé, un tissu qui effectue une transition progressive entre le matériau constituant la couche externe de la voile 1 et le premier matériau tissé de la nervure 8. On peut aussi utiliser de la membrane filamentaire.

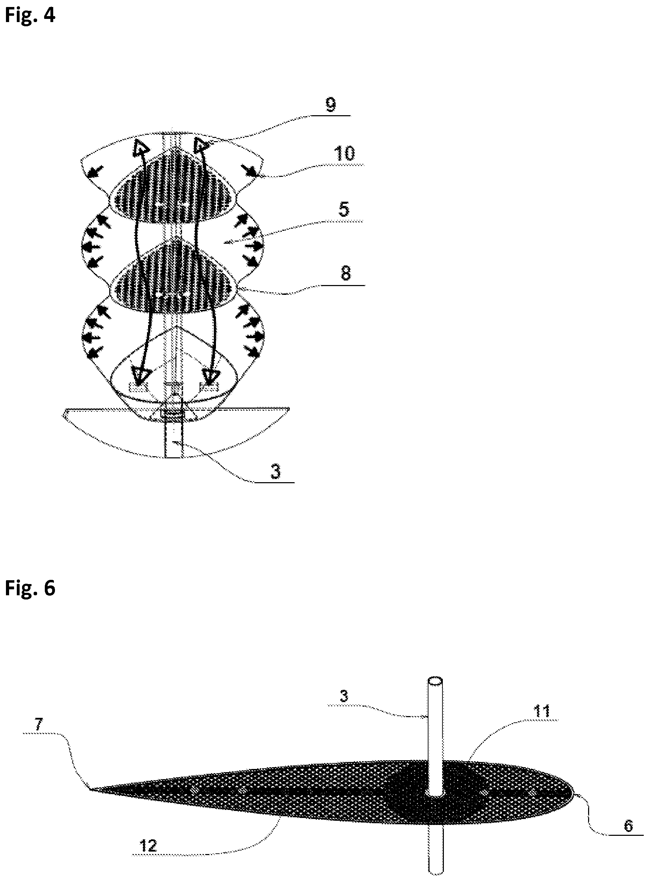

Comme le montre **la** **figure 4****,** chaque cellule 5 est séparée d'une nervure 8. Lors du hissage/affalage, l'air, géré par les ventilateurs, ou tout autre moyen de gonflage, disposés, par exemple, dans le réceptacle de voile, est insufflé ou aspiré dans la cavité de la voile. L'air passe au travers des nervures 8 (flèches 9) de haut en bas ou de bas en haut (selon que l'on gonfle ou dégonfle la voile), permettant ainsi une répartition de pression interne de la voile 1 sensiblement uniforme, que ce soit pour une voile totalement dépliée, pour une voile dont la surface de voilure a été réduite par la prise de ris ou lors du début de gonflage alors que les nervures sont empilées.

La constitution des nervures 6 permet, par ailleurs, de garantir la reprise des efforts liés à la pression interne de la voile 1, ainsi que de pouvoir transmettre la pression aérodynamique exercée sur le profil de la voile 1 vers le mât 3. Les nervures reprennent en effet la pression interne de la voile, et permettent aussi la transmission des efforts aérodynamiques.

Comme symbolisé (flèche 10), la pression interne de la voile s'exerce contre la paroi de la voile.

Le choix particulier du premier matériau tissé selon l'invention des nervures 8, et notamment l'orientation des fils qui constituent ce matériau, permet d'effectuer correctement le passage des efforts aérodynamiques de la voile vers le mât 3. Un passage limité de l'air autour du mât 3 n'est pas pénalisant. Le plus important est de permettre à l'air de passer sur la partie avant de la nervure (vers le bord d'attaque), et sur la partie arrière de la nervure (vers le bord de fuite). Autrement dit, la nervure n'est pas fixée au mât, mais elle est « flottante ». Cela permet toutefois de passer les efforts aérodynamiques tout en permettant de répartir l'air de manière uniforme dans tout le volume de la voile.

Le premier intérêt d'utiliser le premier matériau laissant passer l'air et reprenant les efforts selon l'invention, à la différence des orifices ponctuels répartis sur la surface de la voile, est d'éviter une obstruction partielle ou totale d'un ou plusieurs orifices, pénalisant nettement plus la circulation correcte de l'air dans la cavité de la voile 1.

Le second intérêt est qu'il permet de diminuer notablement les pertes de charge tout en conservant une résistance suffisante pour le passage des efforts, diminuant ainsi la puissance des dispositifs de gonflage, et ainsi la consommation énergétique.

Un dernier intérêt de ce premier matériau est la possibilité de suppression des ventilateurs dans le bord d'attaque. Avec la solution de l'invention, les ventilateurs disposés dans le réceptacle de la voile suffisent pour la majorité des manœuvres nécessitant d'insuffler ou de retirer de l'air.

Comme le montre la **figure 5****,** le cellules 5 laissent passer l'air (flèche 9) vers le haut sur l'élément selon l'invention totalement plié afin de hisser la voile 1.

La représentation schématique de la **figure 6** montre une zone de renfort 11 délimitée autour du mât 3, dans la partie inférieure de la voile. Cette zone représente environ une surface de 7,5m². Elle est constituée en un second matériau différent du premier matériau, qui peut par exemple être réalisé avec le même matériau mais avec un angle différent par exemple : premier matériau ayant un angle de tissage de 0 et 90° et second matériau ayant un angle de +/- 45° par rapport au premier matériau. Dans une variante, ce renfort peut être réalisé en utilisant un même tissu que celui de la nervure et par superposition de deux nappes de tissu à 45° l'une par rapport à l'autre.

Ce second matériau se définit par une dimension de maille d'environ 3 mm.

La figure 5 montre en outre la présence d'une bande 12 constituée d'un matériau de renfort. Cette bande 12 a une largeur d'environ 80mm.

Son rôle est de permettre une répartition des efforts et de limiter l'usure par abrasion aux endroits où passent les différents cordages, tels que ceux des prises de ris ou de la ligne de guidage.

Des renforts ponctuels (non représentés) peuvent être disposés régulièrement sur le bord d'attaque et/ou le bord de fuite au niveau des nervures 6.

### Exemple

L'exemple qui suit, est donné uniquement à titre d'illustration, et n'est nullement limitatif. Le tableau suivant regroupe différentes situations possibles.

| | Voilier | Cargo |
|---|---|---|
| Longueur du bateau (mètre) | 13 | 140 |
| Nombre de voiles | 1 | 8 |
| Nervure de la voile - polyester (g/m²) | 220 | 240 |
| Couche externe de la voile polyester enduit (g/m²) | 110 | 160 |
| Hauteur de la voile (mètre) | 17 | 40 |
| Plus grande longueur de voile (mètre) | 8 | 17 |
| Plus grande largeur de voile (mètre) | 1,8 | 3,5 |
| Surface de la voile (m²) | 100 | 500 |
| Nombre de cellules | 30 | 35 |

La couche externe de la voile, appelée aussi carrosserie, est constituée d'un tissu comprenant une partie externe en contact avec l'air extérieur, et une partie interne. Ce tissu peut être réalisé en un tissé polyester enduit de polyuréthane. Le grammage de ce tissu peut être de 180 g/m² pour une voilure d'environ 100m².

L'accrochage de la partie supérieure de la voile peut être effectué grâce à des bandes auto agrippantes, de type VELCRO. Les liaisons entre les parties extérieures de la voile et les nervures (liaisons internes), ainsi que les liaisons entre les constituants de la partie externe peuvent être effectuées par soudure ou collage ou tous autres moyens de liaison (fermeture éclair par exemple) permettant de garantir, à la fois, un niveau de perméation suffisamment faible compatible avec le système de gonflage existant et aussi garantir le passage des efforts.

## Revendications

1. Elément de propulsion vélique comprenant :
a. un mât (3),
b. une voile (1) gonflable constituée essentiellement de deux surfaces adjacentes (4a, 4b) sensiblement étanches et reliées entre elles sur leur pourtour, formant de la sorte entre elles au moins une cavité fermée autour du mât (3), ladite voile comprenant une partie supérieure, une partie inférieure, un bord d'attaque (6) et un bord de fuite (7),
c. au moins un conduit d'air disposé entre l'intérieur et l'extérieur de la cavité de la voile,
d. au moins un moyen pour injecter de l'air dans ladite cavité, la voile une fois gonflée présentant un profil qui reste en permanence symétrique, indépendamment du déplacement dudit élément de propulsion, de la direction ou de l'intensité du vent,
e. une têtière disposée sur la partie supérieure de la voile
f. un réceptacle de voile disposé entre le bord d'attaque (6) et le bord de fuite (7) sur la partie inférieure de la voile,
**caractérisé en ce que** la voile comprend une pluralité de cellules (5) dans le sens de l'envergure de la voile, chaque cellule (5) s'étendant du bord d'attaque (6) au bord de fuite (7), lesdites cellules (5) étant espacées par une nervure (8) constituée en un premier matériau souple qui laisse passer l'air.

2. Elément selon la revendication 1, **dans lequel** chaque nervure (8) comprend une zone de renfort (11) délimitée autour du mât (3) et constituée en un second matériau composite souple.

3. Elément selon la revendication 2, **dans** lequel le premier et le second matériau souples sont des matériaux tissés ayant un tissage différent.

4. Elément selon l'une des revendications 1 ou 3, **dans lequel** le premier matériau souple comprend des mailles de tissage d'environ 2 à 4 mm.

5. Elément selon l'une des revendications 2 ou 3, **dans lequel** le second matériau souple comprend des mailles de tissage d'environ 2 à 4 mm.

6. Elément selon la revendication 1, **dans lequel** la nervure comprend une bande centrale qui s'étend du bord d'attaque au bord de fuite.

7. Elément selon les revendications 2 et 6, **dans lequel** la bande centrale est constituée par le second matériau souple.

8. Elément selon l'une des revendications 5 ou 6, **dans lequel** la bande centrale a une largeur allant de 1 à 10cm.

9. Elément selon la revendication 1, **dans lequel** les cellules sont espacées entre elles d'une distance comprise entre 0,8 et 2m.

10. Elément selon l'une des revendications précédentes, **dans lequel** des renforts ponctuels sont disposés régulièrement sur le bord d'attaque.

11. Elément selon la revendication 10, **dans lequel** une ligne de guidage est disposée dans la cavité fermée de ladite voile, pour les manœuvres de hissage et d'affalage de la voile, ladite ligne de guidage s'étendant du bord d'attaque au bord de fuite de ladite voile, en passant par la têtière et le réceptacle de voile, ladite ligne de guidage passant au travers des renforts ponctuels.

12. Véhicule à propulsion vélique ou hybride comprenant au moins un élément selon l'une des revendications précédentes, une coque et un mât rendu solidaire de ladite coque tout en gardant un degré de liberté en rotation, **caractérisé en ce que** la majeure partie du mât est disposée à l'intérieur de la cavité de ladite voile gonflable.

13. Véhicule selon la revendication 12, **dans lequel** la voile est orientée en fonction de la direction du vent, et la direction de marche du véhicule de manière manuelle ou automatique.

## Patentansprüche

1. Segelantriebselement, umfassend:
a. einen Mast (3),
b. ein aufblasbares Segel (1), das im Wesentlichen aus zwei benachbarten Flächen (4a, 4b) besteht, die im Wesentlichen dicht und an ihrem Umfang miteinander verbunden sind, wobei sie auf diese Weise mindestens einen geschlossenen Hohlraum um den Mast (3) herum bilden, wobei das Segel einen oberen Teil, einen unteren Teil, eine Vorderkante (6) und eine Hinterkante (7) umfasst,
c. mindestens einen Luftkanal, der zwischen dem Inneren und der Außenseite des Hohlraums des Segels angeordnet ist,
d. mindestens ein Mittel zum Injizieren der Luft in den Hohlraum, wobei das Segel, wenn es aufgeblasen ist, ein Profil aufweist, das stets symmetrisch bleibt, unabhängig von der Bewegung des Antriebselements, der Richtung oder der Stärke des Windes,
e. einen Segelkopf, der am oberen Teil des Segels angeordnet ist,
f. eine Segelaufnahme, die zwischen der Vorderkante (6) und der Hinterkante (7) am unteren Teil des Segels angeordnet ist,
**dadurch gekennzeichnet, dass** das Segel mehrere Zellen (5) in der Richtung der Spannweite des Segels umfasst, wobei sich jede Zelle (5) von der Vorderkante (6) zur Hinterkante (7) erstreckt, wobei die Zellen (5) durch eine Rippe (8) beabstandet sind, die aus einem ersten flexiblen Material besteht, das die Luft hindurchströmen lässt.

2. Element nach Anspruch 1, wobei jede Rippe (8) einen Verstärkungsbereich (11) umfasst, der um den Mast (3) abgegrenzt ist und aus einem zweiten flexiblen Verbundmaterial besteht.

3. Element nach Anspruch 2, wobei das erste und das zweite flexible Material gewebte Materialien aus unterschiedlichen Gewebearten sind.

4. Element nach einem der Ansprüche 1 oder 3, wobei das erste flexible Material Gewebemaschen von ungefähr 2 bis 4 mm umfasst.

5. Element nach einem der Ansprüche 2 oder 3, wobei das zweite flexible Material Gewebemaschen von ungefähr 2 bis 4 mm umfasst.

6. Element nach Anspruch 1, wobei die Rippe einen Mittelstreifen umfasst, der sich von der Vorderkante zur Hinterkante erstreckt.

7. Element nach den Ansprüchen 2 und 6, wobei der Mittelstreifen aus dem zweiten flexiblen Material besteht.

8. Element nach einem der Ansprüche 5 oder 6, wobei der Mittelstreifen eine Breite aufweist, die 1 bis 10 cm beträgt.

9. Element nach Anspruch 1, wobei die Zellen um einen Abstand zwischen 0,8 und 2 m voneinander beabstandet sind.

10. Element nach einem der vorhergehenden Ansprüche, wobei punktförmige Verstärkungen gleichmäßig an der Vorderkante angeordnet sind.

11. Element nach Anspruch 10, wobei eine Führungsleine in dem geschlossenen Hohlraum des Segels angeordnet ist, für die Manöver des Setzens und des Einholens des Segels, wobei sich die Führungsleine von der Vorderkante zur Hinterkante des Segels erstreckt und dabei über den Segelkopf und die Segelaufnahme verläuft, wobei die Führungsleine durch die punktförmigen Verstärkungen verläuft.

12. Fahrzeug mit Segel- oder Hybridantrieb, welches mindestens ein Element nach einem der vorhergehenden Ansprüche, einen Rumpf und einen Mast, der mit dem Rumpf fest verbunden ist, dabei jedoch einen Rotationsfreiheitsgrad behält, umfasst, **dadurch gekennzeichnet, dass** der größte Teil des Mastes im Inneren des Hohlraums des aufblasbaren Segels angeordnet ist.

13. Fahrzeug nach Anspruch 12, wobei das Segel in Abhängigkeit von der Richtung des Windes und der Fahrtrichtung des Fahrzeugs manuell oder automatisch ausgerichtet wird.

## Claims

1. Sail-propulsion element, comprising:
a. a mast (3),
b. an inflatable sail (1) consisting essentially of two substantially fluidtight adjacent surfaces (4a, 4b) joined together along their periphery, thus forming between them at least one cavity closed around the mast (3), said sail comprising an upper part, a lower part, a leading edge (6) and a trailing edge (7),
c. at least one air conduit positioned between the inside and the outside of the cavity of the sail,
d. at least one means for injecting air into said cavity, the sail once inflated having a profile that remains permanently symmetrical, irrespective of the movement of said propulsion element, or of the direction or strength of the wind,
e. a headboard positioned on the upper part of the sail,
f. a sail receptacle positioned between the leading edge (6) and the trailing edge (7) on the lower part of the sail,
**characterized in that** the sail comprises a plurality of cells (5) in the direction of the span of the sail, each cell (5) extending from the leading edge (6) to the trailing edge (7), said cells (5) being spaced apart by ribs (8) made of a first soft material that allows air to pass.

2. Element according to Claim 1, wherein each rib (8) comprises a reinforced zone (11) delimited around the mast (3) and made from a composite second soft material.

3. Element according to Claim 2, wherein the first and the second soft materials are woven materials having different weaves.

4. Element according to one of Claims 1 or 3, wherein the first soft material has a mesh size of around 2 to 4 mm.

5. Element according to one of Claims 2 or 3, wherein the second soft material has a mesh size of around 2 to 4 mm.

6. Element according to Claim 1, wherein the rib comprises a central band which extends from the leading edge to the trailing edge.

7. Element according to Claims 2 and 6, wherein the central band is made from the second soft material.

8. Element according to one of Claims 5 or 6, wherein the central band has a width ranging from 1 to 10 cm.

9. Element according to Claim 1, wherein the cells are spaced apart by a distance of between 0.8 and 2 m.

10. Element according to one of the preceding claims, wherein discrete reinforcers are positioned evenly along the leading edge.

11. Element according to Claim 10, wherein a guide line is positioned in the closed cavity of said sail, for the manoeuvres of hoisting and dropping the sail, said guide line extending from the leading edge to the trailing edge of said sail, passing through the headboard and the sail receptacle, said guide line passing through the discrete reinforcers.

12. Vehicle with sail propulsion or hybrid propulsion comprising at least one element according to one of the preceding claims, a hull and a mast secured to said hull but still retaining a degree of freedom to rotate, **characterized in that** most of the mast is positioned inside the cavity of said inflatable sail.

13. Vehicle according to Claim 12, wherein the sail is oriented according to the wind direction and according to the direction of travel of the vehicle either manually or automatically.
